Europäisches Patentamt

European Patent Office

Office européen des brevets

(11) Publication number: **0 182 453**
A1

# EUROPEAN PATENT APPLICATION

(21) Application number: 85305040.9

(22) Date of filing: 15.07.85

(51) Int. Cl.⁴: **B 65 D 85/52**

(30) Priority: 21.11.84 US 673593

(43) Date of publication of application: 28.05.86
Bulletin 86/22

(84) Designated Contracting States: **AT BE CH DE FR GB IT
LI LU NL SE**

(71) Applicant: **HARRY AND DAVID, Bear Creek Orchards,
Medford, Oregon 97501 (US)**

(72) Inventor: **Turner, Douglas James, 166 Lincoln Street,
Ashland Oregon 97520 (US)**

(74) Representative: **Leale, Robin George et al, FRANK B.
DEHN & CO. Imperial House 15-19 Kingsway, London
WC2B 6UZ (GB)**

(54) **Shipping potted plants.**

(57)   Method and means for shipping growing potted plants are
disclosed in which a plant (5) is planted or grown in a pot (16) in
potting soil (6) covered with a layer of bedding material (7) held in
place by an open-mesh cover (10) secured to the pot.

0182453

GT 148-808

## "Shipping Potted Plants"

This invention relates to the protection of potted growing plants during shipping.

In the past, it has been necessary for potted plants to remain upright during transit in order to prevent the loss of soil or other potting mixture, and possibly even the plant, from the container. Packaged plants loaded incorrectly or tipped during transit are usually crushed, die from loss of soil around the roots, or otherwise become commercially useless.

Attempts to correct the problem have been labor intensive and limiting in scope. One attempted solution has been to use a foam starburst device which fits around the plant stem and covers the top of the mixture in the container. The foam is held in place by a poly bag and twistem gathered around the plant stalk. The starburst holds the soil in the pot but can only be used successfully when there is a single plant stem located in the center of the container opening.

Another attempted solution has been to ship the container before the seeds have germinated or to use bulbs, or tubers or corms which have not sprouted. To ship these items with a soil covering after the plants have grown one-half inch or more is to risk crushing or breaking of the tender sprouts. Due to the differing temperature, light, moisture, and humidity conditions the emerging growth may experience at various destinations, the quality of the resulting plant(s) can vary significantly. In all cases, several weeks elapse before a bloom is produced which can reduce customer/ recipient satisfaction.

Viewed from one aspect the present invention provides a device for protecting growing plants during shipping, which comprises a container, a lower layer of potting soil within said container, an upper layer of fibrous bedding material within said container adapted to retain said potting soil within said container, a plant growing in said potting soil, and an open-mesh cover secured to said container in contact with said fibrous bedding material and adapted to hold the bedding material, the soil and the plant securely in the container and permit the plant to grow through the open-mesh cover.

Viewed from another aspect the invention provides a method of preparing a plant for shipping which comprises placing potting soil in a container, planting a plant in the potting soil, covering the potting soil with a fibrous bedding material, and securing an open-mesh cover to the container over and in contact with said bedding material to retain the bedding material, the potting soil and the plant within the container during shipping.

In a preferred form of the invention a container, such as a plastic flower pot, is packed with a potting mixture into which is planted seeds, seedlings, plant plugs, tubers, corms or bulbs. After the planting procedure has been completed, the potting mixture is covered with a layer of bedding material such as sphagnum moss, straw, shredded waxed paper, pine needles, excelsior or ground cover plants. An open-mesh top is then secured to the pot with the mesh covering the layer of bedding material and holding it in place. The plants are grown (forced) through the mesh to the desired size for shipping.

With the use of corrugated paper shipping cartons and appropriate corrugate locks or "egg crates" to hold the pots in place, as are known to persons having skill in this art, plants prepared in this manner can be shipped without the loss of soil or damage to the plants. Even if the carton is inadvertently inverted during transit, the potting mixture and plant(s) will remain in place and viable. Upon reaching the destination, the open-mesh top can be left in place or the mesh cut and removed.

Thus the present invention, at least in its preferred form, satisfies a long-felt need for a method and means for shipping growing plants while permitting the plants to continue growth during shipping so that the plants arrive at their destination in healthy, undamaged, vigorous condition. This is accomplished by starting plants in potting soil contained in pots, normally plastic, usually having a round or square cross-section. It has been found convenient to use pots measuring four to six inches across the top.

An embodiment of the invention will now be described by way of example and with reference to the accompanying drawings, in which:-

Fig. 1 is a perspective view, partly broken away, of a device according to the invention;

Fig. 2 is a plan view of a cover forming part of the device of Fig. 1; and

Fig. 3 is a vertical medial cross-sectional view of the device.

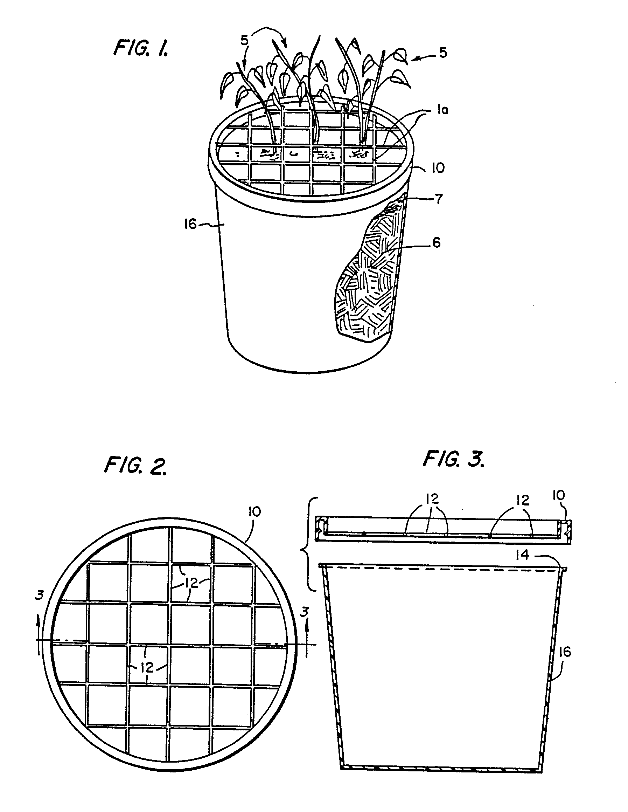

With reference to Fig. 1, growing plants 5 may be transplanted into the potting soil 6 or plant precursors such as seeds, seedlings, plant plugs, tubers, corms or bulbs may be placed in the potting soil for growth into plants. A relatively thin layer of fibrous bedding material 7, usually about one-half to one and one-half inches thick, is placed over the potting soil to hold it in place during shipping of the potted plant. Suitable fibrous bedding materials include sphagnum moss, straw, pine needles, shredded wax paper, excelsoir, ground cover plants and mixtures of these. Other bedding materials may also be used provided that they perform the function of holding the potting soil in place during movement of the pot while permitting growth of the plant through the layer of bedding material. An open-mesh cover is placed over and against the layer of bedding material and secured to the pot to hold the bedding material, and thus the potting soil, in place.

One embodiment of an open-mesh cover comprises a set of one-sixteenth inch diameter plastic rods spaced one inch apart and fastened to a second set of such rods having their longitudinal axis at an angle of about 90 degrees from the longitudinal axis of the first set of rods. In this embodiment, the pot is provided with a lip extending around the inside surface of the pot near its top. The open-mesh cover is trimmed to fit inside the pot and snapped into place beneath the lip.

A preferred embodiment of open-mesh cover is shown in Figs. 2 and 3. This cover comprises a ring 10 of U-shaped cross-section as shown in Fig. 3 having a size and shape such that when inverted it fits over the upper rim 14 of the pot 16 and is held securely in place by a snap-lock mechanism shown in Fig. 3. Any other suitable means may be employed for securing the ring 10 to the top of the pot 16, and is easily provided by persons having skill in the art. The open-mesh portion of the cover is formed by attaching filaments 12 to the ring 10 about one-half to 1.5 inch apart. Plastic filaments are preferred elements for forming the open-mesh cover; however, ribbons, rods, wires, etc., may also be used.

It will thus be seen that the present invention, at least in its preferred forms, provides a new device and shipping method which eliminates or at least reduce the problems outlined hereinbefore and permits the successful shipment of single or multi-stemmed plants in a container (pot).

It is to be clearly understood that there are no particular features of the foregoing specification, or of any claims appended hereto, which are at present regarded as being essential to the performance of the present invention, and that any one or more of such features or combinations thereof may therefore be included in, added to, omitted from or deleted from any of such claims if and when amended during the prosecution of this application or in the filing or prosecution of any divisional application based thereon.

## Claims

1. A device for protecting growing plants during shipping, which comprises a container, a lower layer of potting soil within said container, an upper layer of fibrous bedding material within said container adapted to retain said potting soil within said container, a plant growing in said potting soil, and an open-mesh cover secured to said container in contact with said fibrous bedding material and adapted to hold the bedding material, the soil and the plant securely in the container and permit the plant to grow through the open-mesh cover.

2. A device as claimed in Claim 1, wherein said open-mesh cover comprises filaments, ribbons or rods spaced about one-half inch to one inch apart.

3. A device as claimed in Claim 1 or 2, wherein said fibrous bedding material is selected from the class consisting of sphagnum moss, straw, pine needles, shredded wax paper, excelsior, ground-cover plants and mixtures thereof.

4. A device as claimed in any of Claims 1 to 3, wherein the said container is a pot.

5. A method of preparing a plant for shipping which comprises placing potting soil in a container, planting a plant in the potting soil, covering the potting soil with a fibrous bedding material, and securing an open-mesh cover to the container over and in contact with said bedding material to retain the bedding material, the potting soil and the plant within the container during shipping.

6. A method as claimed in Claim 5, wherein said fibrous bedding material is selected from the class consisting of sphagnum moss, straw, pine needles, shredded wax paper, excelsior, ground-cover plants and mixtures thereof.

7. A method as claimed in Claim 5 or 6, wherein said open-mesh cover comprises filaments, ribbons

0182453

or rods spaced about one-half inch to one inch apart.

8.    A method as claimed in any of Claims 5 to 7, wherein the said container is a pot.

FIG. 1.

FIG. 2.

FIG. 3.

European Patent
Office

**EUROPEAN SEARCH REPORT**

0182453
Application number

EP 85 30 5040

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| | | | B 65 D 85/52 |
| A | FR-A-2 119 194 (MORANE)<br><br>* Figure 3; page 2, lines 11-20 * | 1,2,4,<br>5,7,8 | |
| | --- | | |
| A | US-A-3 147 569 (MURGUIA)<br><br>* Figure 2; column 2, lines 30-49 * | 1,3-6,<br>8 | |
| | --- | | |
| A | FR-A-2 040 325 (VAN REISEN)<br><br>* Figure 1 * | 1,4,5,<br>8 | |
| | --- | | |
| A | FR-A-2 122 819 (CONSO)<br>* Figure 7; page 2, lines 25-28 * | 2,7 | |
| | --- | | |
| A | US-A-3 961 444 (SKAIFE)<br><br>* Figures 3,6; column 2, lines 36-40,63-64 * | 1,3,5,<br>6 | TECHNICAL FIELDS SEARCHED (Int. Cl. ³)<br><br>B 65 D<br>A 01 G |
| | --- | | |
| A | FR-A-2 419 231 (JORRIBES)<br><br>* Figures 2,4; page 2, lines 39,40; page 3, lines 1-5 * | 1,4,5,<br>8 | |
| | ----- | | |

| The present search report has been drawn up for all claims | | |
|---|---|---|
| Place of search<br>THE HAGUE | Date of completion of the search<br>10-01-1986 | Examiner<br>STEEGMAN R. |